# EUROPEAN PATENT SPECIFICATION

(11) **EP 3 702 291 B1**
(45) Date of publication and mention of the grant of the patent: **17.11.2021**
(21) Application number: 20160129.1
(22) Date of filing: 28.02.2020
(51) Int. Cl.: B65B 19/20, B65B 19/22, B65G 47/244

(54) **TRANSFER DRUM TO TRANSFER OBJECTS ALONG A CIRCULAR PATH AND ADJUSTMENT METHOD TO CARRY OUT A FORMAT CHANGE OF THE TRANSFER DRUM**
TRANSFERTROMMEL ZUR ÜBERGABE VON GEGENSTÄNDEN ENTLANG EINER KREISBAHN UND EINSTELLVERFAHREN ZUR DURCHFÜHRUNG EINES FORMATWECHSELS DER TRANSFERTROMMEL
TAMBOUR DE TRANSFERT POUR TRANSFÉRER DES OBJETS LE LONG D'UN TRAJET CIRCULAIRE ET PROCÉDÉ DE RÉGLAGE POUR METTRE EN OEUVRE UN CHANGEMENT DE FORMAT DU TAMBOUR DE TRANSFERT

(30) Priority: 01.03.2019 IT 201900002995
(43) Date of publication of application: 02.09.2020
(73) Proprietor: G.D SOCIETA' PER AZIONI, 40133 Bologna (IT)
(72) Inventor: ZANETTI, Annalisa, 40133 BOLOGNA (IT); SQUARZONI, Michele, 40133 BOLOGNA (IT); FEDERICI, Luca, deceased (IT)
(74) Representative: Maccagnan, Matteo

(56) References cited:
- EP-A1- 0 890 512
- WO-A1-2014/167369
- CN-A- 105 905 607
- US-A- 5 025 910

## Description

### TECHNICAL FIELD

The present invention relates to a transfer drum to transfer objects along a circular path and to an adjustment method for carrying out a format change of the transfer drum.

The present invention finds advantageous application in a transfer drum of a cellophane overwrapping machine for packs of cigarettes, to which the following disclosure will make explicit reference without thereby losing its generality.

### PRIOR ART

A packer plant for cigarettes comprises a packer machine designed to produce packs of cigarettes, a cellophane overwrapping machine designed to apply a transparent plastic overwrap to each pack of cigarettes, and a cartoning machine designed to form groups of packs of cigarettes and to apply normally a rigid wrap and a further transparent plastic overwrap around each group of packs of cigarettes.

Nowadays, packer plants for cigarettes are required to be very flexible, that is, to be able to carry out format change operations simply and quickly (i.e. the operations necessary to modify the packer plant in order to pass from the production of a previous type of packs of cigarettes to the production of a new type of packs of cigarettes).

In known packer plants for cigarettes, the format change operations necessary to modify the ways in which the packs of cigarettes are grouped in the cartoning machine are particularly long and complex, i.e. the ways in which the groups of packs of cigarettes are formed in the cartoning machine.

The patent applications EP0890512A1, WO2014167369A1 and CN105905607A describe a transfer drum to transfer objects along a circular path (in particular collars for the production of packs of cigarettes in the case of patent application EP0890512A1). The transfer drum comprises: a cylindrical support body which is mounted rotatable around a first rotation axis; a plurality of holding heads, each of which is mounted rotatable on the support body so as to rotate, relative to the support body, around its own second rotation axis; a cam which is arranged inside the support body and remains still when the support body rotates around the first rotation axis; and an actuator device which is carried by the support body and comprises for each holding head a cam follower roller engaging the cam and controlling the rotation of the holding head around the second rotation axis. The rotation of the support body around the first rotation axis cyclically moves each holding head along a work path, which extends between an input station where the holding head receives an object and an output station where the holding head releases the object and along a return path that extends between the output station and the input station. In the event of a format change in which a variation of the law of motion imposed upon each holding head is required, it is necessary to dismount the existing cam which must necessarily be replaced with a new cam having a different conformation; however, the replacement of the cam is a particularly long and complex operation and also requires the availability of a storage unit for storing the cam not in use.

In particular, patent application EP0890512A1 discloses a unit for feeding collars for packets of cigarettes to a continuous packing line; wherein the collars, picked up successively and in steps by a transfer device, are transferred rapidly by the transfer device to a continuously-moving supply assembly, which feeds the collars successively to the packing line after squarely folding two lateral wings of each collar.

### DESCRIPTION OF THE INVENTION

The object of the present invention is to provide a transfer drum to transfer objects along a circular path and an adjustment method to carry out a format change of the transfer drum, which transfer drum and adjustment method allow to solve the above described drawbacks and are, at the same time, simple and inexpensive to implement.

According to the present invention, a transfer drum to transfer objects along a circular path and an adjustment method to carry out a format change of the transfer drum are provided, according to what is claimed in the attached claims.

The claims describe embodiments of the present invention forming an integral part of the present description.

### BRIEF DESCRIPTION OF THE DRAWINGS

The present invention will now be described with reference to the attached drawings, which illustrate a non-limiting example of embodiment, wherein:
- Figure 1 is a schematic and perspective view of a cellophane overwrapping machine for overwrapping packs of cigarettes;
- Figure 2 is a perspective view of a transfer drum (produced according to the present invention) of an output unit of the cellophane overwrapping machine of Figure 1;
- Figure 3 is a perspective view, and with the removal of some parts for the sake of clarity, of the transfer drum of Figure 2;
- Figure 4 is a further perspective view, and with the removal of some parts for the sake of clarity, of the transfer drum of Figure 2;
- Figures 5, 6 and 7 are three front and schematic views of the transfer drum of Figure 2 in three different operating configurations;
- Figure 8 is a front and schematic view of an alternative embodiment of an input unit of the cellophane overwrapping machine of Figure 1;
- Figures 9, 10 and 11 are three front and schematic views of a transfer drum (produced according to the present invention) of the input unit of Figure 8 in three different operating configurations;
- Figure 12 is a schematic view of a production and packer plant for cigarettes, which comprises the cellophane overwrapping machine of Figure 1;
- Figure 13 is a perspective and schematic view of a grouping unit of a cartoning machine of the production and packer plant of Figure 12; and
- Figures 14 and 15 are two perspective and schematic views of respective alternatives of the grouping unit for groups of packs of cigarettes of Figure 13.

### PREFERRED EMBODIMENTS OF THE INVENTION

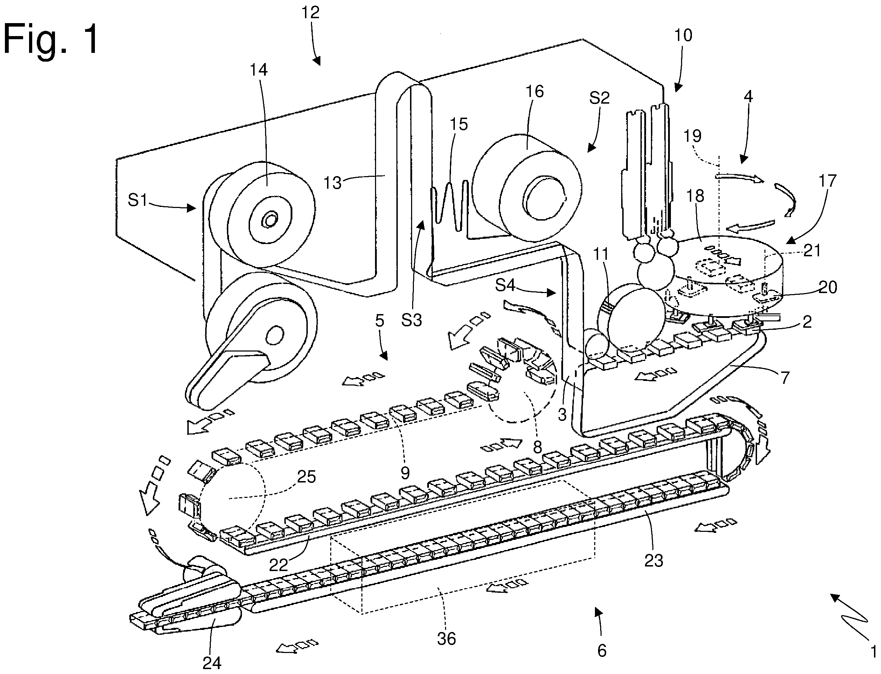

In Figure 1 number 1 denotes as a whole a cellophane overwrapping machine for producing the overwrap of packs 2 of cigarettes in respective wrapping sheets 3 made of transparent plastic material.

The cellophane overwrapping machine 1 comprises an input unit 4 which receives the packs 2 of cigarettes entering the cellophane overwrapping machine 1, a wrapping unit 5 which is arranged downstream of the input unit 4 and wraps and stabilizes a wrapping sheet 3 around each pack 2 of cigarettes, and an output unit 6 which is arranged downstream of the wrapping unit 5 and leads the packs 2 of cigarettes out of the cellophane overwrapping machine 1.

The wrapping unit 5 comprises a conveyor belt 7 which receives the packs 2 of cigarettes from the input unit 4 and feeds the packs 2 of cigarettes along a first rectilinear and horizontal wrapping path, a wrapping drum 8 which receives the packs 2 of cigarettes from the conveyor belt 7 and feeds the packs 2 of cigarettes along a second circular (in particular semi-circular-shaped) wrapping path, and a conveyor belt 9 which receives the packs 2 of cigarettes from the wrapping drum 8 and feeds the packs 2 of cigarettes along a third rectilinear and horizontal wrapping path (parallel and aligned with the first wrapping path) .

A feeding unit 10 to feed coupons 11 is arranged above the conveyor belt 7 (i.e. along the first rectilinear wrapping path) which lays a coupon 11, from above, on each pack 2 of cigarettes fed by the conveyor belt 7.

A feeding unit 12 is provided to feed the wrapping sheets 3, which cyclically feeds the wrapping sheets 3 between the conveyor belt 7 and the wrapping drum 8 (i.e. between the first rectilinear wrapping path and the second circular wrapping path) so that each pack 2 of cigarettes leaving the conveyor belt 7 and entering the wrapping drum 8 intercepts a corresponding wrapping sheet 3 which folds in a "U"-shape around the pack 2 of cigarettes. The feeding unit 12 comprises: an unwinding station S1 in which a tape 13 of (plastic and transparent) wrapping material is unwound from a reel 14, an unwinding station S2 in which a tear-off tape 15 of plastic material is unwound from a reel 16, an application station S3 in which the tear-off tape 15 is applied to the tape 13 of wrapping material, and a cutting station S4 in which the tape 13 of wrapping material (provided with the tear-off tape 15) is partially (i.e. not completely) cut transversely so as to cyclically separate the individual wrapping sheets 3 from the tape 13 of wrapping material by means of a subsequent tearing. According to an alternative embodiment, in the cutting station S4 the tape 13 of wrapping material (provided with the tear-off tape 15) is cut transversely and completely in order to separate immediately (i.e. without a subsequent tearing) the individual wrapping sheets 3 from the tape 13 of wrapping material.

In the wrapping drum 8 (i.e. along the second circular wrapping path) each wrapping sheet 3 is folded into a tube around the corresponding pack 2 of cigarettes (causing, if necessary, the tearing of the wrapping sheet 3 from the tape 13 of wrapping material and therefore the complete separation of the wrapping sheet 3 from the tape 13 of wrapping material) and is subsequently stabilized in this shape by heat sealing. In the conveyor belt 9 (i.e. along the third rectilinear wrapping path), the two open ends of the tube-folded wrapping sheet 3 are folded in on themselves (typically by means of the so-called *"soap-bar folds"*) and then stabilized in this shape by heat sealing.

The input unit 4 comprises a transfer drum 17 (*"reconfigurable"* as will be better described in the following) which picks up the packs 2 of cigarettes (without overwrapping) from an inlet of the cellophane overwrapping machine 1 and releases the packs 2 of cigarettes onto the conveyor belt 7 of the wrapping unit 5. The transfer drum 17 comprises a cylindrical support body 18 which is mounted rotatable around a vertical rotation axis 19 and a plurality of holding heads 20, each of which is mounted rotatable on the support body 18 so as to rotate, with respect to the support body 18, around a vertical rotation axis 21 (i.e. parallel to the rotation axis 19).

The output unit 6 comprises a conveyor belt 22 which feeds the packs 2 of cigarettes along a rectilinear and horizontal heating path in which each wrapping sheet 3, folded around a pack 2 of cigarettes, is heated at a temperature sufficient to trigger a thermo-retraction of the plastic material thus making the wrapping sheet 3 well stretched around the pack 2 of cigarettes. The output unit 6 comprises a conveyor belt 23, which is arranged under the conveyor belt 22, receives the packs 2 of cigarettes from the conveyor belt 22, and feeds the packs 2 of cigarettes along a rectilinear and horizontal cooling path. The output unit 6 comprises a conveyor belt 24 which is arranged immediately downstream of the conveyor belt 23, receives the packs 2 of cigarettes compacted by the conveyor belt 23, and feeds the packs 2 of cigarettes along a (short) rectilinear and horizontal output path at the end of which the packs 2 of cigarettes definitively leave the cellophane overwrapping machine 1.

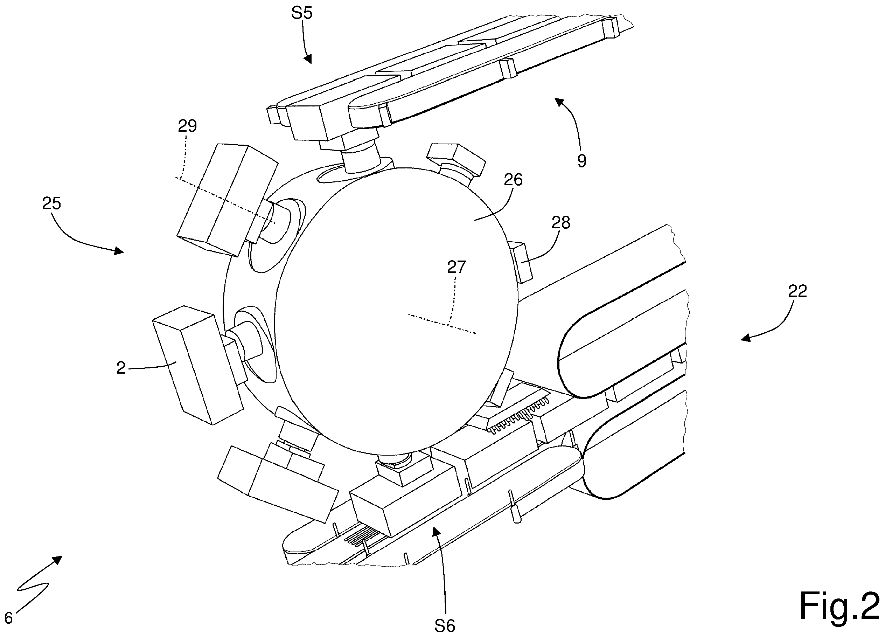

The output unit 6 comprises a transfer drum 25 (*"reconfigurable"* as will be better described in the following) which transfers the packs 2 of cigarettes (provided with overwrapping) from the conveyor belt 9 of the wrapping unit 5 to the conveyor belt 22. As illustrated in Figure 2, the transfer drum 25 comprises a cylindrical support body 26 which is mounted rotatable around a vertical rotation axis 27 and a plurality of holding heads 28, each of which is mounted rotatable on the support body 26 for rotating, with respect to the support body 26, around a rotation axis 29 orthogonal to the rotation axis 27 (the two rotation axes 27 and 29 are not mutually incident).

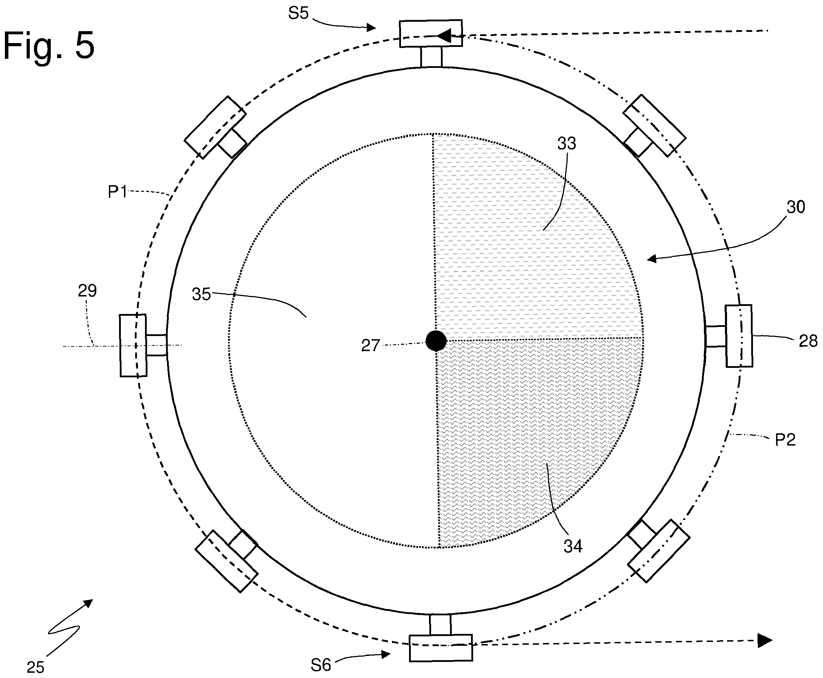

As illustrated in Figure 5, the rotation of the support body 26 around the rotation axis 27 cyclically moves each holding head 28 along a work path P1 (i.e. a *"useful"* path, where the holding head 28 holds and moves a corresponding pack 2 of cigarettes) which extends between an input station S5, where the holding head 28 receives a pack 2 of cigarettes from the conveyor belt 9 of the wrapping unit 5 and an output station S6 where the holding head 28 transfers the pack 2 of cigarettes to the conveyor belt 22. Furthermore, the rotation of the support body 26 around the rotation axis 27 cyclically moves each holding head 28 along a return path P2 (i.e. on an *"useless"* path, where the holding head 28 does not hold and move any pack 2 of cigarettes and returns towards the beginning of the work path P1) which extends between the output station S6 and the input station S5. Obviously, the combination (sum) of the work path P1 and the return path P2 corresponds to the 360° turn angle.

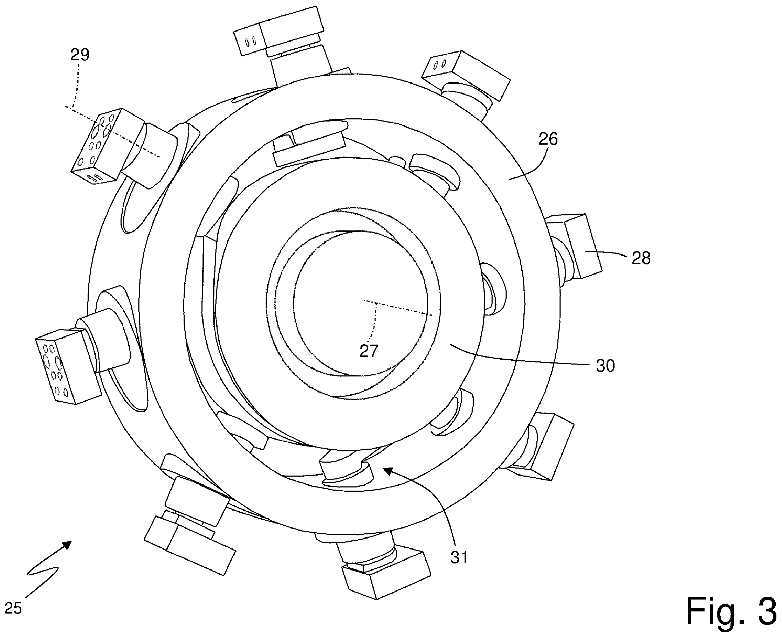

As illustrated in Figure 3, the transfer drum 25 comprises a cam 30 (centred on the rotation axis 27) which is arranged inside the support body 26 and remains still when the support body 26 rotates around the rotation axis 27. In other words, during the normal operation of the cellophane overwrapping machine 1 the cam 30 remains anchored to a frame of the cellophane overwrapping machine 1 and the support body 26 rotates around and with respect to the cam 30.

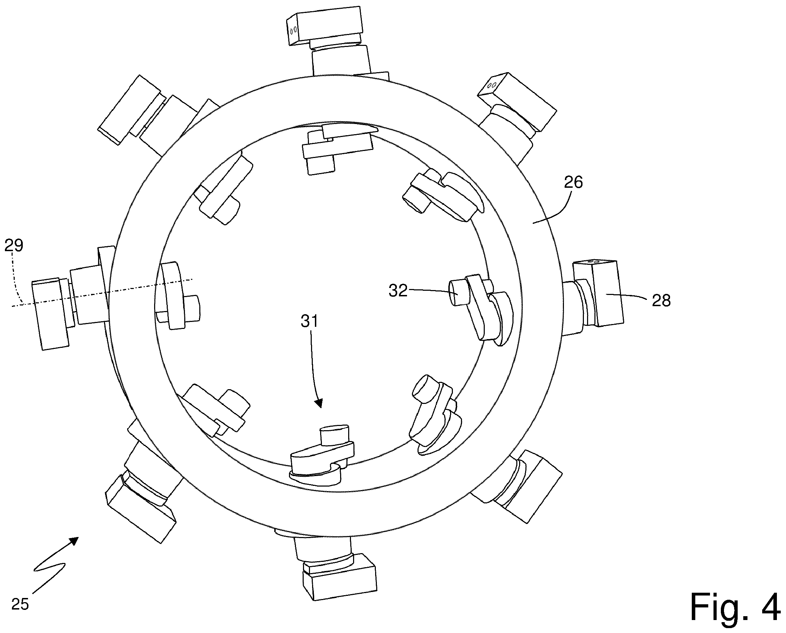

According to what is illustrated in Figure 4, the transfer drum 25 further comprises an actuator device 31 which is carried by the support body 26, comprises a cam follower roller 32 engaging the cam 30, and controls (imposes) the rotation of the holding head 28 around the rotation axis 29.

As illustrated in Figure 5, the cam 30 of the transfer drum 25 comprises a portion 33 designed to cause each holding head 28 to move with a first law of motion (in particular a rotation of 90° clockwise around the rotation axis 29), a portion 34 designed to cause each holding head 28 to move with a second law of motion (in particular a rotation of 90° counterclockwise around the rotation axis 29) different from the first law of motion and alternative to the first law of motion, and a portion 35 designed to cause each holding head 28 to move with a third law of motion (in particular free of rotations around the rotation axis 29) different from the first and second laws of motion and alternative to the first and second laws of motion.

In the embodiment illustrated in Figures 5, 6 and 7, the work path P1 and the return path P2 have a same angular extension of 180°, the portion 33 and the portion 34 have a same angular extension of 90°, and the portion 35 has an angular extension of 180°. Consequently, the portions 33 and 34 have, both individually and together, an angular extension not exceeding an angular extension (equal to 180°) of the return path P2.

In the configuration illustrated in Figure 5, the portion 35 (which is neutral, i.e. does not cause any rotation of the holding heads 28 around the rotation axes 29) is arranged at the work path P1 while the portions 33 and 34 (which are active, that is, they cause rotations of the holding heads 28 around the rotation axes 29) are both arranged at the return path P2. Consequently, in use, the holding heads 28 do not carry out any rotation around the rotation axes 29 along the work path P1 (i.e. when they transport respective packs 2 of cigarettes from the input station S5 to the output station S6) and the holding heads 28 carry out a rotation of 90° clockwise around the rotation axes 29 and then a subsequent rotation of 90° counterclockwise around the rotation axes 29 along the return path P2 (i.e. when they do not transport the packs 2 of cigarettes). In summary, in the configuration illustrated in Figure 5, the transfer drum 25 does not impose any variation of orientation to the packs 2 of cigarettes since along the work path P1 the holding heads 28 do not carry out any rotation around the rotation axes 29.

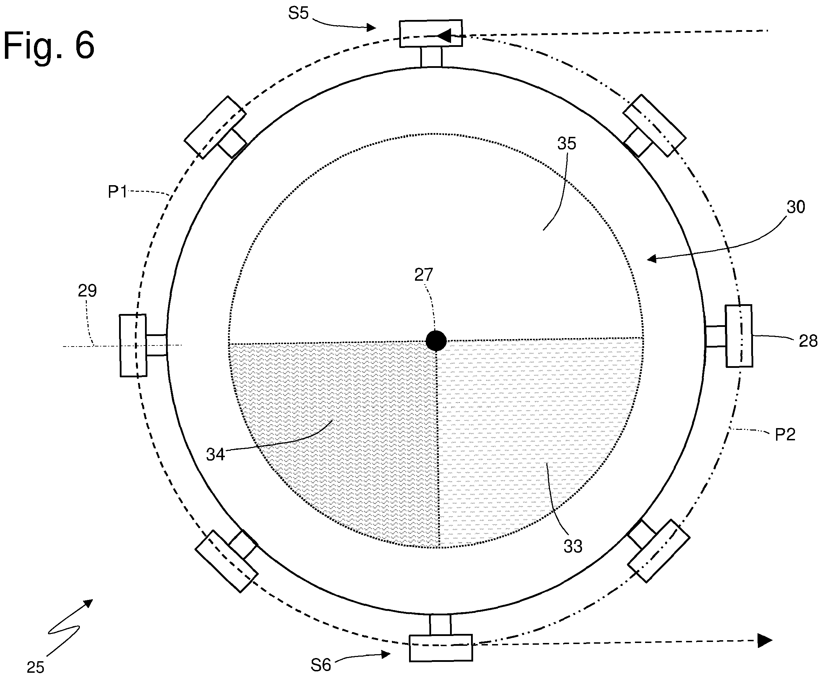

In the configuration illustrated in Figure 6, the portion 35 (which is neutral, i.e. does not cause any rotation of the holding heads 28 around the rotation axes 29) is arranged partly (half) at the work path P1 and for the remaining part (for the remaining half) is arranged at the return path P2. The portion 33 (which is active, i.e. it imposes upon the holding heads 28 clockwise rotations around the rotation axes 29) is arranged at the work path P1, and the portion 34 (which is active, i.e. it imposes upon the holding heads 28 counterclockwise rotations around the rotation axes 29) is arranged at the return path P2. Consequently, in use, the holding heads 28 rotate by 90° clockwise around the rotation axes 29 along the work path P1 (i.e. when they transport respective packs 2 of cigarettes from the input station S5 to the output station S6) and the holding heads 28 rotate by 90° counterclockwise around the rotation axes 29 along the return path P2 (i.e. when they do not transport the packs 2 of cigarettes). In summary, in the configuration illustrated in Figure 6, the transfer drum 25 imposes a variation of orientation upon the packs 2 of cigarettes since along the work path P1 the holding heads 28 rotate by 90° clockwise around the rotation axes 29.

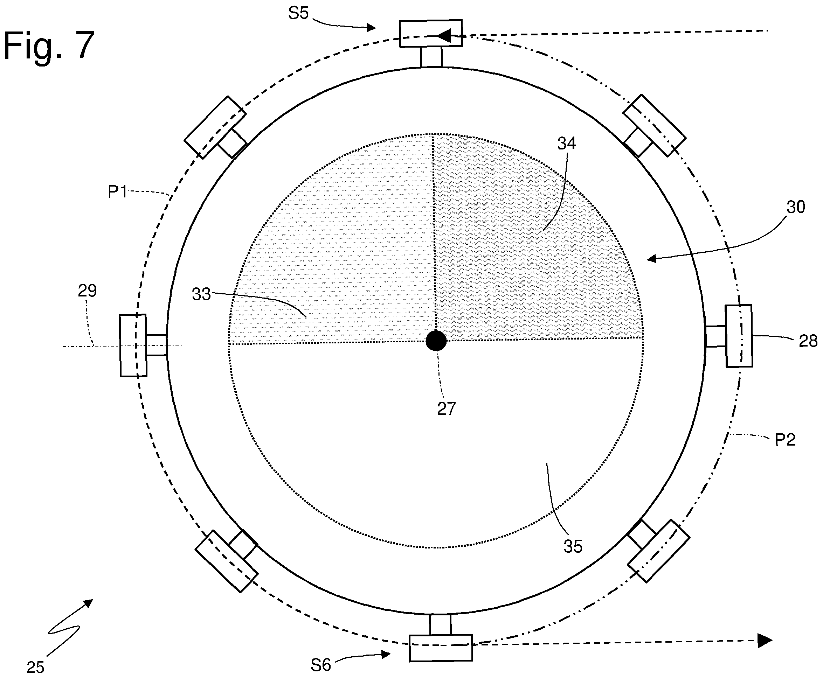

In the configuration illustrated in Figure 7, the portion 35 (which is neutral, i.e. does not cause any rotation of the holding heads 28 around the rotation axes 29) is arranged partly (half) at the work path P1 and for the remaining part (for the remaining half) is arranged at the return path P2. The portion 33 (which is active, i.e. it imposes upon the holding heads 28 clockwise rotations around the rotation axes 29) is at the return path P2, and the portion 34 (which is active, i.e. it imposes upon the holding heads 28 counterclockwise rotations around the rotation axes 29) is arranged at the work path P1. Consequently, in use, the holding heads 28 rotate by 90° counterclockwise around the rotation axes 29 along the work path P1 (i.e. when they transport respective packs 2 of cigarettes from the input station S5 to output station S6) and the holding heads 28 rotate by 90° clockwise around the rotation axes 29 along the return path P2 (i.e. when they do not transport the packs 2 of cigarettes). Summarizing, in the configuration illustrated in Figure 7, the transfer drum 25 imposes a variation of orientation upon the packs 2 of cigarettes since along the work path P1 the holding heads 28 rotate by 90° counterclockwise around the rotation axes 29.

A further configuration (not illustrated) is also possible, in which the portion 35 (which is neutral, i.e. does not cause any rotation of the holding heads 28 around the rotation axes 29) is completely arranged at the return path P2, while the portions 33 and 34 (which are active, i.e. they impose upon the holding heads 28 rotations around the rotation axes 29) are both arranged at the work path P1. Consequently, in use, the holding heads 28 rotate by 90° clockwise around the rotation axes 29 and then a subsequent rotation by 90° counterclockwise around the rotation axes 29 along the work path P1 (i.e. when they transport respective packs 2 of cigarettes from the input station S5 to the output station S6) and the holding heads 28 do not rotate around the rotation axes 29 along the return path P2 (i.e. when they do not transport the packs 2 of cigarettes). Said configuration is neutral in that the transfer drum 25 imposes two opposite variations of orientation (which therefore cancel each other out) upon the packs 2 of cigarettes (along the work path P1 the holding heads 28 carry out two opposite rotations around the rotation axes 29), but, unlike the configuration illustrated in Figure 5, it imposes upon the packs 2 of cigarettes unnecessary stress.

Further configurations not illustrated and intermediate between the configurations illustrated in Figures 5, 6 and 7 are also possible wherein the portion 33 or 34 of the cam 30 is only partially arranged at the work path P1, i.e. part of the portion 33 or 34 is arranged at the work path P1 while the remaining part of the portion 33 or 34 is arranged at the return path P2. In these configurations along the work path P1 the holding heads 28 (and therefore the packs 2 of cigarettes carried by the holding heads 28) rotate by less than 90° clockwise (portion 33) or counterclockwise (portion 34) around the rotation axes 29. For example, if half portion 33 or 34 is arranged at the work path P1 then the holding heads 28 (and therefore the packs 2 of cigarettes carried by the holding heads 28) rotate by 45° clockwise (portion 33) or counterclockwise (portion 34) around the rotation axes 29.

As previously mentioned, during normal operation of the cellophane overwrapping machine 1 the cam 30 remains anchored to a frame of the cellophane overwrapping machine 1 and the support body 26 rotates around and with respect to the cam 30. Consequently, along the work path P1 and/or along the return path P2 (depending on the configuration of the cam 30) the holding heads 28 rotate around the rotation axes 29 as a result of the thrust imposed by the cam 30 and transmitted to the holding heads 28 from the corresponding actuator devices 31.

Whereas, when the cellophane overwrapping machine 1 is still (i.e. holding still), the support body 26 of the transfer drum 25 is still (that is, it does not rotate around the rotation axis 27) and, if necessary (i.e. to carry out a format change), the cam 30 can be rotated around the rotation axis 27 so as to vary the configuration of the cam 30, for example to arrange the whole portion 35 at the work path P1 and arrange the portions 33 and 34 at the return path P2 (as illustrated in Figure 5), so as to arrange the portion 33 at the work path P1 (as illustrated in Figure 6), or to arrange the portion 34 at the work path P1 (as illustrated in Figure 7).

The transfer drum 17 of the input unit 4 can also be produced *"reconfigurable"* (i.e. with a central cam 30, which can be arranged in different configurations to impose upon the packs 2 of cigarettes different types of orientation according to the desired format) exactly as the transfer drum 25 of the output unit 6. In other words, internally the transfer drum 17 of the input unit 4 can be produced in the same way as the transfer drum 25 of the output unit 6 and therefore comprising a cam 30 having differentiated portions 33, 34 and 35.

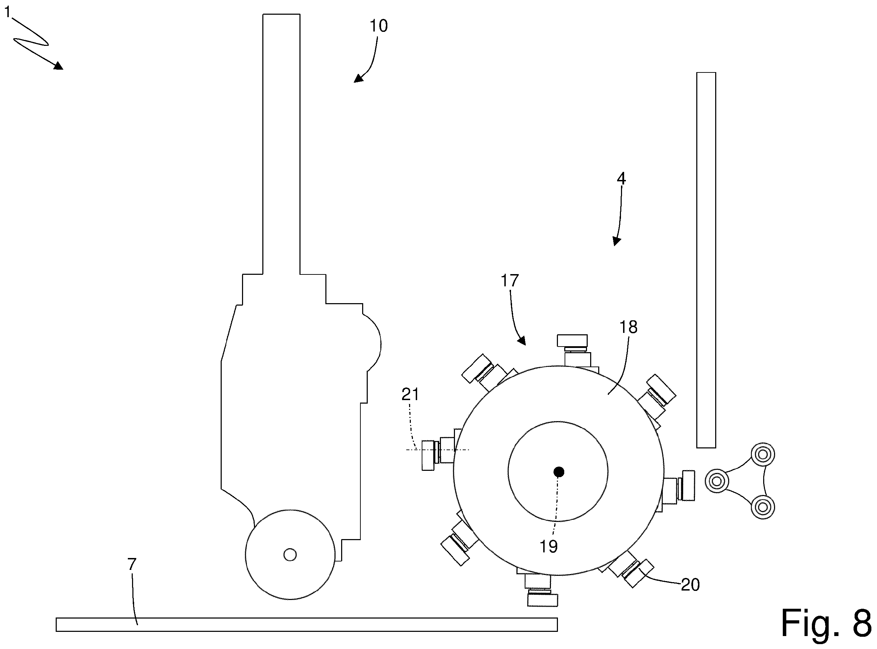

Figure 8 illustrates an alternative embodiment of the input unit 4 which differs from the embodiment illustrated in Figure 1 only in that the transfer drum 17 is oriented vertically instead of horizontally (i.e. the rotation axis 19 of the transfer drum 17 is horizontal instead of vertical).

The transfer drum 17 of the input unit 4 illustrated in Figure 8 is *"reconfigurable"* exactly like the transfer drum 25 of the output unit 6. Consequently, the transfer drum 17 of the input unit 4 illustrated in Figure 8 comprises a central cam 30 (arranged inside the support body 18) which can be arranged in different configurations around the rotation axis 19 so as to impose upon the packs 2 of cigarettes different types of orientation according to the type of desired wrap and/or the type of desired coupon application.

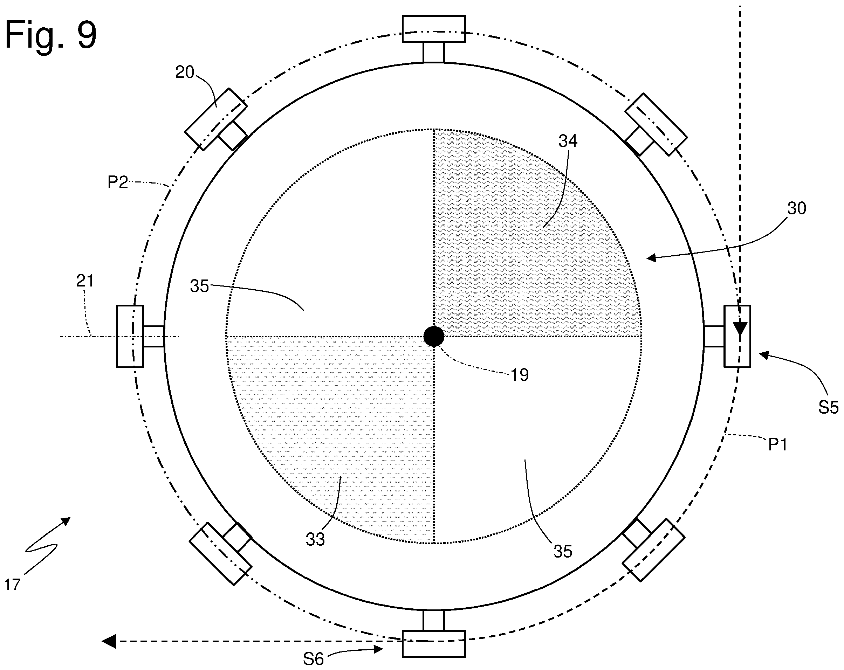

As illustrated in Figure 9, the cam 30 of the transfer drum 17 comprises a portion 33 designed to cause each holding head 20 to move with a first law of motion (in particular a rotation of 90° clockwise around the rotation axis 21), a portion 34 designed to cause each holding head 20 to move with a second law of motion (in particular a rotation of 90° counterclockwise around the rotation axis 21) different from the first law of motion and alternative to the first law of motion, and two distinct and separate portions 35 each designed to cause each holding head 20 to move with a third law of motion (in particular without rotating around the rotation axis 21) different from the first and second law of motion and alternative to the first and second law of motion.

In the embodiment illustrated in Figures 9, 10 and 11, the work path P1 has an angular extension of only 90° and consequently the return path P2 has an angular extension of 270°, the portion 33 and the portion 34 have a same angular extension of 90°, and also each portion 35 has an angular extension of 90°. Consequently, the portions 33 and 34 have, both individually and together, an angular extension not exceeding an angular extension (equal to 270°) of the return path P2.

In the configuration illustrated in Figure 9, a portion 35 (which is neutral, i.e. does not cause any rotation of the holding heads 20 around the rotation axes 21) is arranged at the work path P1 while the portions 33 and 34 (which are active, that is, they cause rotations of the holding heads 20 around the rotation axes 21) are arranged at the return path P2 (together with the other portion 35). Consequently, in use, the holding heads 20 do not carry out any rotation around the rotation axes 21 along the work path P1 (i.e. when they transport respective packs 2 of cigarettes from the input station S5 to the output station S6) and the holding heads 20 carry out a rotation of 90° clockwise around the rotation axes 21 and then a subsequent rotation of 90° counterclockwise around the rotation axes 21 along the return path P2 (i.e. when they do not transport the packs 2 of cigarettes). In summary, in the configuration illustrated in Figure 9, the transfer drum 25 does not impose any variation of orientation upon to the packs 2 of cigarettes since along the work path P1 the holding heads 20 do not rotate around the rotation axes 21.

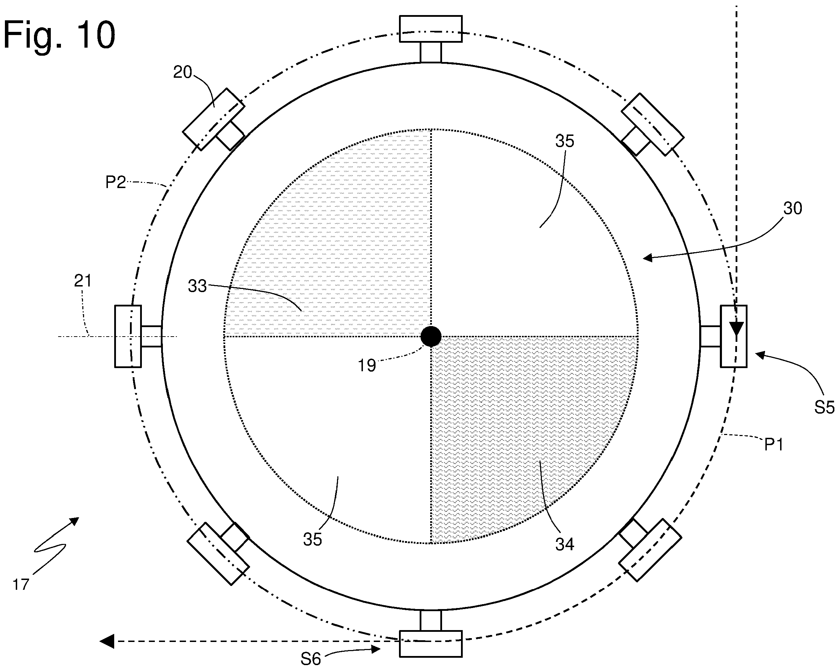

In the configuration illustrated in Figure 10, the portions 35 (which are neutral, i.e. do not cause any rotation of the holding heads 20 around the rotation axes 21) are both arranged at the return path P2, the portion 34 (which is active, i.e. it causes counterclockwise rotations of the holding heads 20 around the rotation axes 21) is arranged at the work path P1, and the portion 33 (which is active, i.e. it causes clockwise rotations of the holding heads 20 around the rotation axes 21) is arranged at the return path P2. Consequently, in use, the holding heads 20 rotate by 90° counterclockwise around the rotation axes 21 along the work path P1 (i.e. when they transport respective packs 2 of cigarettes from the input station S5 to output station S6) and the holding heads 20 rotate by 90° clockwise around the rotation axes 21 along the return path P2 (i.e. when they do not transport the packs 2 of cigarettes). Summarizing, in the configuration illustrated in Figure 10, the transfer drum 25 imposes upon the packs 2 of cigarettes a variation of orientation as along the work path P1 the holding heads 20 rotate by 90° counterclockwise around the rotation axes 21.

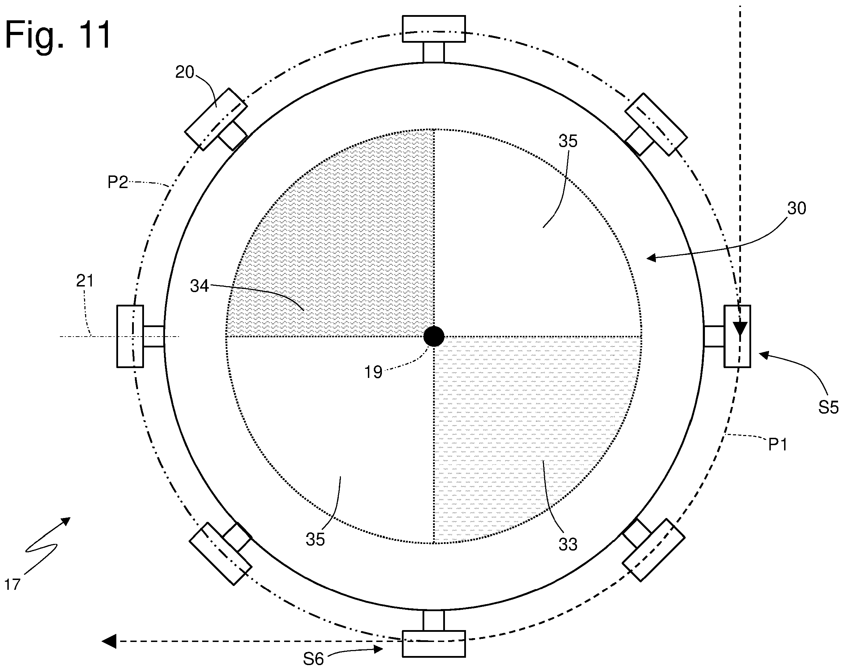

In the configuration illustrated in Figure 11, the portions 35 (which are neutral, i.e. do not cause any rotation of the holding heads 20 around the rotation axes 21) are both arranged at the return path P2. The portion 34 (which is active, i.e. causes counterclockwise rotations of the holding heads 20 around the rotation axes 21) is arranged at the return path P2, and the portion 33 (which is active, i.e. causes clockwise rotations of the holding heads 20 around the rotation axes 21) is arranged at the work path P1. Consequently, in use, the holding heads 20 rotate by 90° clockwise around the rotation axes 21 along the work path P1 (i.e. when they transport respective packs 2 of cigarettes from the input station S5 to output station S6) and the holding heads 20 rotate by 90° counterclockwise around the rotation axes 21 along the return path P2 (i.e. when they do not transport the packs 2 of cigarettes). In summary, in the configuration illustrated in Figure 11, the transfer drum 25 imposes upon the packs 2 of cigarettes a variation of orientation as along the work path P1 the holding heads 20 rotate by 90° clockwise around the rotation axes 21.

Further configurations not illustrated and intermediate between the configurations illustrated in Figures 9, 10 and 11 are also possible wherein the portion 33 or 34 of the cam 30 is only partially arranged at the work path P1, i.e. part of the portion 33 or 34 is arranged at the work path P1 while the remaining part of the portion 33 or 34 is arranged at the return path P2. In these configurations along the work path P1 the holding heads 20 (and therefore the packs 2 of cigarettes carried by the holding heads 20) rotate clockwise (portion 33) or counterclockwise (portion 34) by less than 90° around the rotation axes 21. For example, if half portion 33 or 34 is arranged at the work path P1 then the holding heads 20 (and therefore the packs 2 of cigarettes carried by the holding heads 20) rotate by 45° clockwise (portion 33) or counterclockwise (portion 34) around the rotation axes 21.

According to other embodiments not illustrated, the portions 33 and 34 of each cam 30 could be configured to impose upon the corresponding holding heads 20 or 28 (therefore upon the packs 2 of cigarettes carried by the holding heads 20 or 28 along the work path P1) a rotation other than 90°, for example a rotation of 180°. According to other embodiments not illustrated, the portions 33 and 34 of each cam 30 could each have an angular extension other than 90°.

As mentioned previously, the transfer drums 17 and 25 are mounted rotatable around the respective rotation axes 19 and 27 to be rotated when the cellophane overwrapping machine 1 is still (i.e. holding still) and a format change is carried out (i.e. the necessary operations to modify the cellophane overwrapping machine 1 so as to pass from the production of a previous type of packs 2 of cigarettes to the production of a new type of packs 2 of cigarettes). According to a possible embodiment, the transfer drums 17 and 25 are provided with respective electric actuators which, when the cellophane overwrapping machine 1 is still (i.e. holding still) are designed to rotate the transfer drums 17 and 25 around the respective rotation axes 19 and 27.

According to a possible embodiment schematically illustrated in Figure 1, the output unit 6 is designed to house an overturning device 36, which is designed to rotate the packs 2 of cigarettes by 180° around an overturn axis parallel to the feeding direction of the conveyor belt 23. Preferably, the overturning device 36 is provided with helices, which pick up and rotate the packs 2 of cigarettes by 180° and is arranged along the conveyor belt 23 or between the conveyor belt 23 and the conveyor belt 24. The overturning device 36 is installed (or activated) when the format of the packs 2 of cigarettes requires an overturning of the packs 2 of cigarettes (i.e. a 180° rotation) before the packs 2 of cigarettes leave the cellophane overwrapping machine 1 (i.e. in the output unit 6 of the cellophane overwrapping machine 1).

According to a further embodiment not illustrated, the cellophane overwrapping machine 1 comprises a further *"reconfigurable"* transfer drum (exactly like the transfer drum 17 of the input unit 4 and like the transfer drum 25 of the output unit 6) which is arranged in the wrapping unit 5 downstream of the feeding unit 10 to feed coupons 11 (i.e. immediately upstream of the wrapping drum 8) and is alternative or in addition to the transfer drum 17 and/or to the transfer drum 25 (i.e. according to a possible embodiment, the cellophane overwrapping machine 1 could comprise three *"reconfigurable"* transfer drums).

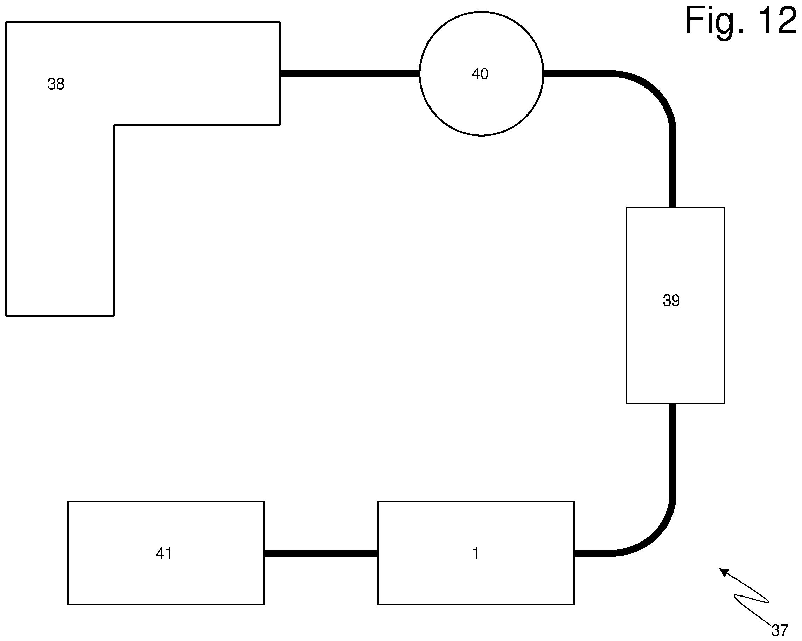

Figure 12 schematically illustrates a plant 37 for the production and packaging of cigarettes; the plant 37 comprises a manufacturing machine 38 for producing cigarettes with a filter (formed by the union of a packer machine and a filter inserting machine), a packer machine 39 which receives the cigarettes from the manufacturing machine 38 (by an intermediate storage unit 40) and produces the packs of cigarettes 2, the cellophane overwrapping machine 1 which receives the packs 2 of cigarettes from the packer machine 39 and performs the overwrap of the packs 2 of cigarettes with respective wrapping sheets 3 of transparent plastic material, and a cartoning machine 41 which forms groups of packs 2 of cigarettes (typically formed by ten packs 2 of cigarettes each) and apply a paper/cardboard wrap and a subsequent transparent plastic overwrap around each group of packs 2 of cigarettes.

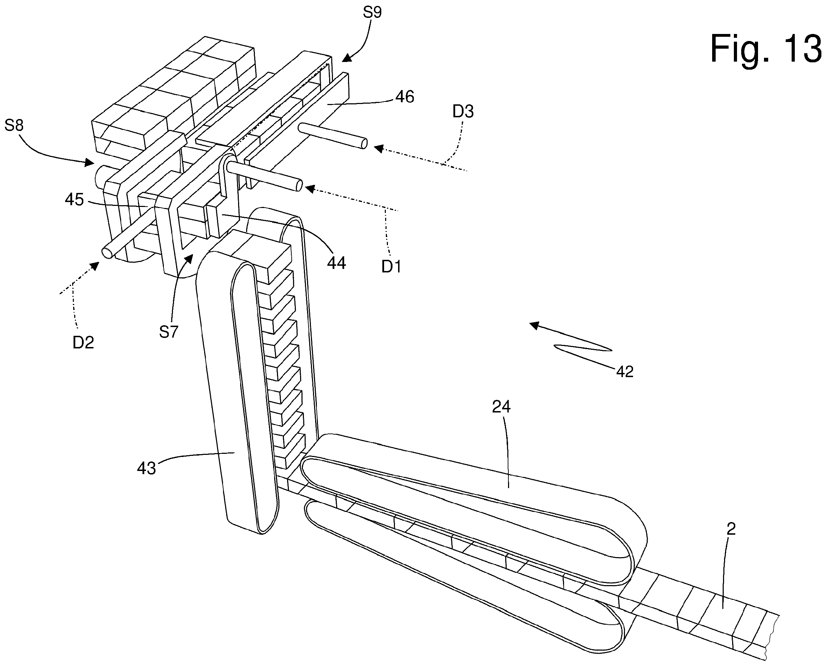

Figure 13 illustrates a grouping unit 42 for the cartoning machine 41, which forms groups of packs 2 of cigarettes. The grouping unit 42 comprises a conveyor belt 43 which receives the packs 2 of cigarettes from the conveyor belt 24 of the cellophane overwrapping machine 1 (which constitutes the output of the cellophane overwrapping machine 1) and feeds the packs 2 of cigarettes along a rectilinear and vertical ascent path at the end of which the packs 2 of cigarettes reach a stacking station S7. In the stacking station S7 stacks of packs 2 of cigarettes are formed, each of which is formed, in the embodiment illustrated in Figure 13, by two packs 2 of cigarettes arranged one above the other. A pusher 44 is provided which pushes each stack of two packs 2 of cigarettes from the stacking station S7 to an intermediate station S8 along a horizontal pushing direction D1 (therefore perpendicular to the rectilinear and vertical ascent path defined by the conveyor belt 43). A further pusher 45 is provided which pushes each stack of two packs 2 of cigarettes from the intermediate station S8 to a grouping station S9 along a horizontal thrust direction D2 and perpendicular to the thrust direction D1. In the grouping station S9 a group of packs 2 of cigarettes is composed by ten packs 2 of cigarettes. In particular, the group of packs 2 of cigarettes is formed by placing five stacks of two packs 2 of cigarettes side-by-side by means of five corresponding transfers carried out by the pusher 45. Once a group of packs 2 of cigarettes composed by ten packs 2 of cigarettes is finished, a pusher 46 feeds the group of packs 2 of cigarettes towards a subsequent wrapping unit pushing the group of packs 2 of cigarettes along a horizontal thrust direction D3, perpendicular to the thrust direction D2, and parallel to (and spaced from) the thrust direction D1.

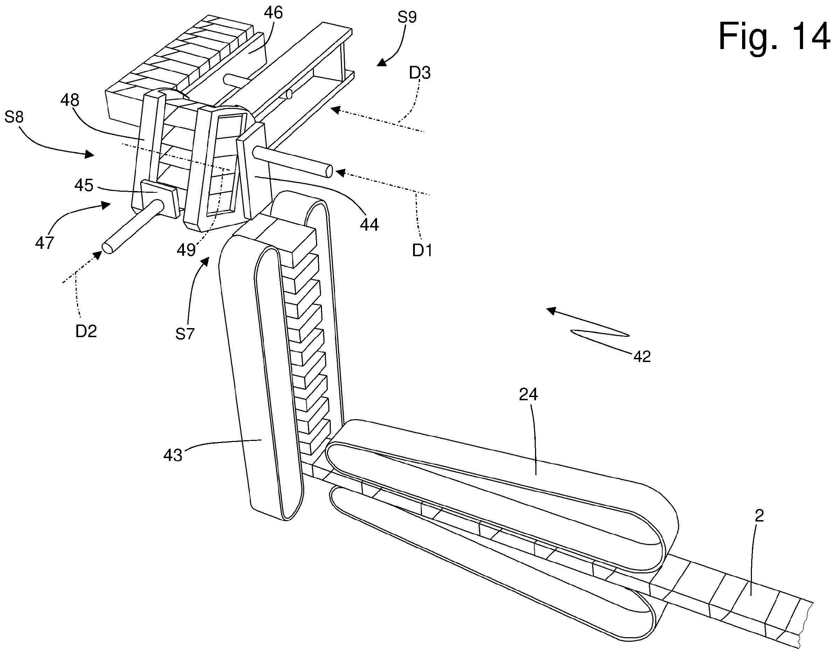

In the alternative illustrated in Figure 14, stacks of packs 2 of cigarettes are formed in the stacking station S7, each of which is formed of five packs 2 of cigarettes arranged one on top of the other. Furthermore, in the intermediate station S8 a rotation device 47 is provided, which rotates each stack of packs 2 of cigarettes by 90° and around a horizontal rotation axis before the stack of packs 2 of cigarettes is pushed into the grouping station S9 by the pusher 45. The rotation device 47 comprises a housing body 48 which is mounted rotatable around a horizontal rotation axis 49, has on one side an input opening facing the stacking station S7 through which a stack of packs 2 of cigarettes enters the housing body 48 pushed by the pusher 44, and has on another side an output opening (arranged perpendicularly with respect to the input opening) facing towards the grouping station S9 through which a stack of packs 2 of cigarettes leaves the housing body 48 pushed by the pusher 45. Obviously to form a group of packs 2 of cigarettes composed by ten packs 2 of cigarettes, it is sufficient to place two stacks of five packs 2 of cigarettes side-by-side and in the grouping station S9 by means of two corresponding transfers carried out by the pusher 45.

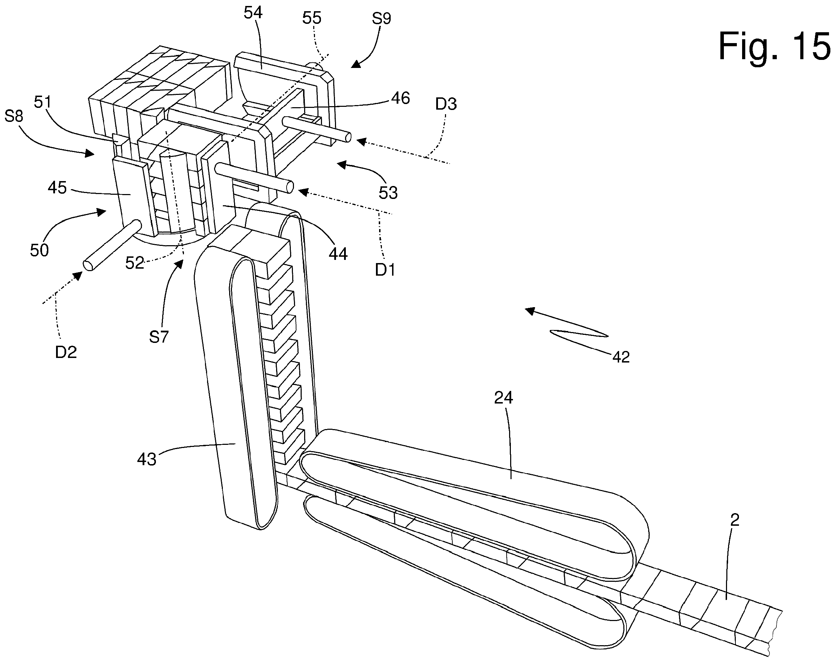

In the alternative illustrated in Figure 15, stacks of packs 2 of cigarettes are formed in the stacking station S7, each of which is formed of five packs 2 of cigarettes arranged one above the other. Furthermore, in the intermediate station S8 a rotation device 50 is provided which rotates by 90° and around a vertical rotation axis each stack of packs 2 of cigarettes before the stack of packs 2 of cigarettes is pushed into the grouping station S9 by the pusher 45. The rotation device 50 comprises a housing body 51 which is mounted rotatable around a vertical rotation axis 52, has on one side an input opening facing the stacking station S7 through which a stack of packs 2 of cigarettes enters the housing body 51 pushed by the pusher 44, and has on another side an output opening (arranged perpendicularly with respect to the input opening) facing the grouping station S9 through which a stack of packs 2 of cigarettes leaves the housing body 51 pushed by the pusher 45. Obviously to form a group of packs 2 of cigarettes composed by ten packs 2 of cigarettes, it is sufficient to bring two stacks of five packs 2 of cigarettes side-by-side and in the grouping station S9 by means of two corresponding transfers carried out by the pusher 45. In the embodiment illustrated in Figure 15, in the grouping station S9 a rotation device 53 is provided which rotates each group of packs 2 of cigarettes by 90° before the pusher 46 feeds the group of packs 2 of cigarettes. The rotation device 53 comprises a housing body 54 which is mounted rotatable around a horizontal rotation axis 55 (perpendicular to the pushing direction D3), it has, on one side, an input opening facing the intermediate station S8 through which a group of packs 2 of cigarettes enters the housing body 54 pushed by the pusher 45, and on another side has an output opening (arranged perpendicularly with respect to a input opening) facing downstream of the grouping station S9 through which a group of packs 2 of cigarettes comes out of the housing body 54 pushed by the pusher 46. According to a different embodiment not illustrated, the rotation device 53 of the grouping station S9 is not provided.

According to other embodiments not illustrated, each group of packs 2 of cigarettes is composed by a number other than ten of packs 2 of cigarettes (for example five packs 2 of cigarettes, six packs 2 of cigarettes, eight packs 2 of cigarettes, twelve 2 packs of cigarettes ...).

The grouping unit 42 described above is very easy and compact to implement since it is formed by a reduced number of components, each of which is simple to produce. At the same time, the grouping unit 42 described above is extremely flexible, since by modifying a few parts it is possible to produce different types of groups of packs 2 of cigarettes.

In the embodiment wherein three *"reconfigurable"* transfer drums are provided, the transfer drum 17 of the input unit 4 has the function of orienting the packs 2 of cigarettes to optimize (simplify) the feeding of the coupons 11 into the feeding unit 10, the further transfer drum arranged between the feeding unit 10 and the wrapping unit 5 has the function of orienting the packs 2 of cigarettes according to the desired wrapping direction, and the transfer drum 17 of the output unit 6 has the function of orienting the packs 2 of cellophane-wrapped cigarettes according to the needs of the grouping unit 42 of the cartoning machine 41 (possibly in combination with the overturning device 36).

The embodiments described herein can be combined with each other without departing from the scope of the present invention.

The transfer drums 17 and 25 described above have numerous advantages.

Firstly, the transfer drums 17 and 25 described above allow, during a format change operation, to change in a simple, fast and flexible way, the law of motion followed by the corresponding holding heads 20 and 28 along the work path P1. In particular, the variation of the law of motion followed by the corresponding holding heads 20 and 28 along the work path P1 does not provide for the replacement of any component, but only provides for a limited rotation (normally 90° or 180° and possibly automatic) of the cams 30 around the respective rotation axes 19 and 27.

Furthermore, the transfer drums 17 and 25 described above are simple and fast to manufacture since, with respect to similar transfer drums, they provide for few and limited modifications to the corresponding cams 30.

A transfer drum 17 or 25 of the type described above (or *"reconfigurable"* thanks to a central cam 30 which can be arranged in different configurations for different types of orientation according to the desired format) can be used not only in a cellophane overwrapping machine, but in any other type of automatic machine that requires the transfer of objects (packages other than packs of cigarettes, food products, pharmaceutical products ...) with different orientations according to the format.

The cellophane overwrapping machine 1 described above has numerous advantages.

Firstly, the cellophane overwrapping machine 1 described above allows, during a format change operation, the orientation of the packs 2 of cigarettes which come out of the cellophane overwrapping machine 1 (and therefore enter the cartoning machine 41) to be changed in a simple, fast and flexible way, possibly also by using the overturning device 36 installed along the conveyor belt 24 of the output unit 6. In this way, the cartoning machine 41 can receive the packs 2 of cigarettes always with the optimal orientation according to the desired grouping modes (i.e. the modes with which the groups of packs 2 of cigarettes are produced) and therefore the grouping unit 42 of the cartoning machine 41 can be carried out in a simpler way (for example as previously described). In other words, thanks to the flexibility of the cellophane overwrapping machine 1, the cartoning machine 41 always receives the packs 2 of cigarettes oriented in the best way to form the groups of packs 2 of cigarettes and consequently, the grouping unit 42 for the cartoning machine 41 can be carried out in a more simple manner (for example as previously described).

Furthermore, the cellophane overwrapping machine 1 described above is simple and fast to manufacture since, with respect to a similar known cellophane overwrapping machine, it substantially provides only the replacement of the standard transfer drums with the transfer drums 17 and 25 described above.

The embodiment illustrated in the attached Figures refers to the production of a pack of cigarettes, but the present invention is applicable without substantial modifications also to the production of any other type of pack of smoking articles (for example a pack of cigars, a pack of electronic cigarettes of the liquid vaporization type, a pack of new generation cigarettes without combustion of tobacco ...).

### LIST OF REFERENCE NUMBERS OF THE FIGURES

- 1: cellophane overwrapping machine
- 2: packs of cigarettes
- 3: wrapping sheets
- 4: input unit
- 5: wrapping unit
- 6: output unit
- 7: conveyor belt
- 8: wrapping drum
- 9: conveyor belt
- 10: feeding unit
- 11: coupon
- 12: feeding unit
- 13: tape of wrapping material
- 14: reel
- 15: tear-off tape
- 16: reel
- 17: transfer drum
- 18: support body
- 19: rotation axis
- 20: holding heads
- 21: rotation axis
- 22: conveyor belt
- 23: conveyor belt
- 24: conveyor belt
- 25: transfer drum
- 26: support body
- 27: rotation axis
- 28: holding heads
- 29: rotation axis
- 30: cam
- 31: actuator device
- 32: cam follower roller
- 33: portion
- 34: portion
- 35: portion
- 36: overturning device
- 37: plant
- 38: manufacturing machine
- 39: packer machine
- 40: storage unit
- 41: cartoning machine
- 42: grouping unit
- 43: conveyor belt
- 44: pusher
- 45: pusher
- 46: pusher
- 47: rotation device
- 48: housing body
- 49: rotation axis
- 50: rotation device
- 53: rotation device
- 54: housing body
- 55: rotation axis
- P1: work path
- P2: return path
- S1: unwinding station
- S2: unwinding station
- S3: application station
- S4: cutting station
- S5: input station
- S6: output station
- S7: stacking station
- S8: intermediate station
- S9: grouping station
- D1: pushing direction
- D2: pushing direction
- D3: pushing direction

## Claims

1. A transfer drum (17; 25) to transfer objects (2) along a circular path; the transfer drum (17; 25) comprises:
a cylindrical support body (18; 26), which is mounted rotatable around a first rotation axis (19; 27);
at least one holding head (20; 28), which is mounted rotatable on the support body (18; 26) so as to rotate, relative to the support body (18; 26), around a second rotation axis (21; 29); a cam (30), which is arranged inside the support body (18; 26) and remains still when the support body (18; 26) rotates around the first rotation axis (19; 27); and
an actuator device (31), which is carried by the support body (18; 26), comprises a cam follower roller (32) engaging the cam (30), and controls the rotation of the holding head (20; 28) around the second rotation axis (21; 29);
wherein the rotation of the support body (18; 26) around the first rotation axis (19; 27) cyclically moves the holding head (20; 28) along a work path (P1), which extends between an input station (S5), where the holding head (20; 28) receives an object (2), and an output station (S6), where the holding head (20; 28) releases the object (2), and along a return path (P2), which extends between the output station (S6) and the input station (S5) ;
the transfer drum (17; 25) is **characterized in that:**
the cam (30) comprises at least a first portion (33), which is designed to cause the holding head (20; 28) to move with a first law of rotation motion around the second rotation axis (21; 29), and a second portion (34), which is designed to cause the holding head (20; 28) to move with a second law of rotation motion around the second rotation axis (21; 29), which is different from the first law of rotation motion and is at least partially alternative to the first law of rotation motion; and
the cam (30) is designed to be rotated around the first rotation axis (19; 27), when the support body (18; 26) is still due to a standstill of the machine during which a format change is carried out, so as to place the first portion (33) at least partly at the work path (P1) and the second portion (34) at least partly at the return path (P2) or vice versa so as to modify the law of rotation motion around the second rotation axis (21; 29) that the cam (30) causes upon the holding head (20; 28) along the work path (P1).

2. The transfer drum (17; 25) according to claim 1, wherein the first portion (33) and/or the second portion (34) have an angular extension not exceeding an angular extension of the return path (P2) .

3. The transfer drum (17; 25) according to claim 1 or 2, wherein:
the first portion (33) is designed to rotate the holding head (20; 28) around the second rotation axis (21; 29) in a clockwise direction; and
the second portion (34) is designed to rotate the holding head (20; 28) around the second rotation axis (21; 29) in a counterclockwise direction.

4. The transfer drum (17; 25) according to claim 3, wherein the cam (30) comprises a third portion (35), which is designed to cause the holding head (20; 28) to move with a third law of rotation motion around the second rotation axis (21; 29), which is different from the first and the second laws of rotation motion.

5. The transfer drum (17; 25) according to claim 4, wherein the third portion (35) does not cause any rotation of the holding head (20; 28) around the second rotation axis (21; 29).

6. The transfer drum (17; 25) according to claim 5, wherein:
the work path (P1) and the return path (P2) have a same angular extension of 180°;
the first portion (33) and the second portion (34) have a same angular extension of 90°; and
the third portion (35) has an angular extension of 180°.

7. The transfer drum (17; 25) according to claim 5, wherein:
the work path (P1) has an angular extension of 90°;
the return path (P2) has an angular extension of 270°;
the first portion (33) and the second portion (34) have a same angular extension of 90°; and
two third portions (35) are provided, which are interposed between the first portion (33) and the second portion (34) and
each have an angular extension of 90°.

8. An adjustment method to carry out a format change of a transfer drum (17; 25) to transfer objects (2) along a circular path; the transfer drum (17; 25) comprises:
a cylindrical support body (18; 26), which is mounted rotatable around a first rotation axis (19; 27);
at least one holding head (20; 28), which is mounted rotatable on the support body (18; 26) so as to rotate, relative to the support body (18; 26), around a second rotation axis (21; 29);
a cam (30), which is arranged inside the support body (18; 26) and remains still when the support body (18; 26) rotates around the first rotation axis (19; 27); and
an actuator device (31), which is carried by the support body (18; 26), comprises a cam follower roller (32) engaging the cam (30), and controls the rotation of the holding head (20; 28) around the second rotation axis (21; 29);
wherein the rotation of the support body (18; 26) around the first rotation axis (19; 27) cyclically moves the holding head (20; 28) along a work path (P1), which extends between an input station (S5), where the holding head (20; 28) receives an object (2) and an output station (S6), where the holding head (20; 28) releases the object (2), and along a return path (P2), which extends between the output station (S6) and the input station (S5) ;
the adjustment method comprises the steps of:
allowing the cam (30) to have at least a first portion (33),
which is designed to cause the holding head (20; 28) to move with a first law of rotation motion around the second rotation axis (21; 29), and a second portion (34), which is designed to cause the holding head (20; 28) to move with a second law of rotation motion around the second rotation axis (21; 29), which is different from the first law of rotation motion and is at least partially alternative to the first law of rotation motion; and
rotating the cam (30) around the first rotation axis (19; 27), when the support body (18; 26) is still due to a standstill of the machine during which a format change is carried out, so as to place the first portion ( 33) at least partly at the work path (P1) and the second portion (34) at least partly at the return path (P2) or vice versa so as to modify the law of rotation motion around the second rotation axis (21; 29) that the cam (30) imposes upon the holding head (20; 28) along the work path (P1).

9. A cellophane overwrapping machine (1) to apply an overwrap to a pack (2); the cellophane overwrapping machine (1) comprises:
an input unit (4), which receives the packs (2) entering the cellophane overwrapping machine (1);
a wrapping unit (5), which is arranged downstream of the input unit (4) and wraps and stabilizes a wrapping sheet (3) around each pack (2); and
an output unit (6), which is arranged downstream of the wrapping unit (5) and leads the packs (2) out of the cellophane overwrapping machine (1);
the cellophane overwrapping machine (1) is **characterized in that** the input unit (4) and/or the output unit (6) comprise a transfer drum (17; 25) designed according to one of the claims from 1 to 7.

10. The cellophane overwrapping machine (1) according to claim 9, wherein the wrapping unit (5) comprises a feeding unit (10) to feed coupons (11) and a transfer drum (17; 25), which is arranged downstream of the feeding unit (10) to feed coupons (11) and is designed according to one of the claims from 1 to 7.

11. The cellophane overwrapping machine (1) according to claim 9 or 10, wherein a first transfer drum (17; 25) designed according to one of claims from 1 to 7 is arranged in the input unit (4) .

12. The cellophane overwrapping machine (1) according to claim 9, 10 or 11, wherein a second transfer drum (17; 25) produced according to one of claims from 1 to 7 is arranged in the output unit (6).

13. The cellophane overwrapping machine (1) according to one of the claims from 9 to 12, wherein a third transfer drum (17; 25) produced according to one of claims from 1 to 7 is arranged in the wrapping unit (5).

14. The cellophane overwrapping machine (1) according to one of the claims from 9 to 13, wherein the output unit (6) is designed to house an overturning device (36), which is designed to rotate the packs (2) by 180°.

15. A packer plant (37) comprising:
a packer machine (39) designed to produce packs (2);
a cellophane overwrapping machine (1) according to one of the claims from 9 to 14 and designed to apply an overwrap to each pack (2); and
a cartoning machine (41), which is designed to form groups of packs (2) and to apply at least one wrap around each group of packs (2).

## Patentansprüche

1. Umladetrommel (17; 25) zum Umladen von Objekten (2) längs eines kreisförmigen Pfads; wobei die Umladetrommel (17; 25) umfasst:
einen zylindrischen Stützkörper (18; 26), der drehbar um eine erste Drehachse (19; 27) montiert ist;
wenigstens einen Haltekopf (20; 28), der an dem Stützkörper (18; 26) drehbar montiert ist, um sich relativ zu dem Stützkörper (18; 26) um eine zweite Drehachse (21; 29) zu drehen;
einen Nocken (30), der im Inneren des Stützkörpers (18; 26) angeordnet ist und in Ruhe bleibt, wenn sich der Stützkörper (18; 26) um die erste Drehachse (19; 27) dreht; und
eine Aktuatorvorrichtung (31), die von dem Stützkörper (18; 26) getragen wird, die eine Nockenstößel-Walze (32) umfasst, die mit dem Nocken (30) in Eingriff ist, und die Drehung des Haltekopfs (20; 28) um die zweite Drehachse (21; 29) steuert;
wobei die Drehung des Stützkörpers (18; 26) um die erste Drehachse (19; 27) den Haltekopf (20; 28) längs eines Arbeitswegs (P1), der sich zwischen einer Eingabestation (S5), bei der der Haltekopf (20; 28) ein Objekt (2) aufnimmt, und einer Ausgabestation (S6), bei der der Haltekopf (20; 28) das Objekt (2) freigibt, erstreckt, und längs eines Rückwegs (P2), der sich zwischen der Ausgabestation (S6) und der Eingabestation (S5) erstreckt, zyklisch bewegt;
wobei die Umladetrommel (17; 25) **dadurch gekennzeichnet ist, dass**:
der Nocken (30) wenigstens einen ersten Abschnitt (33), der so ausgelegt ist, um zu bewirken, dass sich der Haltekopf (20; 28) mit einem ersten Drehbewegungsgesetz um die zweite Drehachse (21; 29) bewegt, und einen zweiten Abschnitt (34), der so ausgelegt ist, um zu bewirken, dass sich der Haltekopf (20; 28) mit einem zweiten Drehbewegungsgesetz um die zweite Drehachse (21; 29) bewegt, das sich von dem ersten Drehbewegungsgesetz unterscheidet und wenigstens teilweise alternativ zu dem ersten Drehbewegungsgesetz ist, umfasst; und
der Nocken (30) so ausgelegt ist, um um die erste Drehachse (19; 27) gedreht zu werden, wenn der Stützkörper (18; 26) wegen eines Stillstands der Maschine, währenddessen eine Formatänderung durchgeführt wird, in Ruhe ist, um den ersten Abschnitt (33) wenigstens teilweise an dem Arbeitsweg (P1) und den zweiten Abschnitt (34) wenigstens teilweise am Rückweg (P2) oder umgekehrt anzuordnen, um das Drehbewegungsgesetz um die zweite Drehachse (21; 29) so zu modifizieren, dass der Nocken (30) längs des Arbeitswegs (P1) auf den Haltekopf (20; 28) einwirkt.

2. Umladetrommel (17; 25) nach Anspruch 1, wobei der erste Abschnitt (33) und/oder der zweite Abschnitt (34) eine Winkelausdehnung haben, die eine Winkelausdehnung des Rückwegs (P2) nicht übertrifft.

3. Umladetrommel (17; 25) nach Anspruch 1 oder 2, wobei:
der erste Abschnitt (33) so ausgelegt ist, um den Haltekopf (20; 28) um die zweite Drehachse (21; 29) in einer Richtung in einem Uhrzeigersinn zu drehen; und
der zweite Abschnitt (34) so ausgelegt ist, um den Haltekopf (20; 28) um die zweite Drehachse (21; 29) in einer Richtung in einem Gegenuhrzeigersinn zu drehen.

4. Umladetrommel (17; 25) nach Anspruch 3, wobei der Nocken (30) einen dritten Abschnitt (35) umfasst, der so ausgelegt ist, um zu bewirken, dass sich der Haltekopf (20; 28) mit einem dritten Drehbewegungsgesetz um die zweite Drehachse (21; 29) dreht, die sich von dem ersten und dem zweiten Drehbewegungsgesetz unterscheidet.

5. Umladetrommel (17; 25) nach Anspruch 4, wobei der dritte Abschnitt (35) keine Drehung des Haltekopfs (20; 28) um die zweite Drehachse (21; 29) bewirkt.

6. Umladetrommel (17; 25) nach Anspruch 5, wobei:
der Arbeitsweg (P1) und der Rückweg (P2) eine gleiche Winkelausdehnung von 180° haben;
der erste Abschnitt (33) und der zweite Abschnitt (34) eine gleiche Winkelausdehnung von 90° haben; und
der dritte Abschnitt (35) eine Winkelausdehnung von 180° hat.

7. Umladetrommel (17; 25) nach Anspruch 5, wobei:
der Arbeitsweg (P1) eine Winkelausdehnung von 90° hat;
der Rückweg (P2) eine Winkelausdehnung von 270° hat;
der erste Abschnitt (33) und der zweite Abschnitt (34) eine gleiche Winkelausdehnung von 90° haben; und
zwei dritte Abschnitte (35) vorgesehen sind, die zwischen dem ersten Abschnitt (33) und dem zweiten Abschnitt (34) angeordnet sind und beide eine Winkelausdehnung von 90° haben.

8. Einstellverfahren zum Ausführen einer Formatänderung einer Umladetrommel (17; 25) zum Umladen von Objekten (2) längs eines kreisförmigen Pfads, wobei die Umladetrommel (17; 25) umfasst:
einen zylindrischen Stützkörper (18; 26), der drehbar um eine erste Drehachse (19; 27) montiert ist;
wenigstens einen Haltekopf (20; 28), der an dem Stützkörper (18; 26) drehbar montiert ist, um sich relativ zum Stützkörper (18; 26) um eine zweite Drehachse (21; 29) zu drehen;
einen Nocken (30), der im Inneren des Stützkörpers (18; 26) angeordnet ist und in Ruhe bleibt, wenn sich der Stützkörper (18; 26) um die erste Drehachse (19; 27) dreht; und
eine Aktuatorvorrichtung (31), die durch den Stützkörper (18; 26) gehalten wird, die eine Nockenstößel-Walze (32) umfasst, die mit dem Nocken (30) in Eingriff ist und die Drehung des Haltekopfs (20; 28) um die zweite Drehachse (21; 29) steuert;
wobei die Drehung des Stützkörpers (18; 26) um die erste Drehachse (19; 27) den Haltekopf (20; 28) längs eines Arbeitswegs (P1), der sich zwischen einer Eingabestation (S5), bei der der Haltekopf (20; 28) ein Objekt (2) aufnimmt, und einer Ausgabestation (S6), bei der der Haltekopf (20; 28) das Objekt (2) freigibt, erstreckt und längs eines Rückwegs (P2), der sich zwischen der Ausgabestation (S6) und der Eingabestation (S5) erstreckt, zyklisch bewegt;
wobei das Einstellverfahren die Schritte umfasst:
Zulassen, dass der Nocken (30) wenigstens einen ersten Abschnitt (33), der so ausgelegt ist, um zu bewirken, dass sich der Haltekopf (20; 28) mit einem ersten Drehbewegungsgesetz um die zweite Drehachse (21; 29) bewegt, und einen zweiten Abschnitt (34), der so ausgelegt ist, um zu bewirken, dass sich der Haltekopf (20; 28) mit einem zweiten Drehbewegungsgesetz um die zweite Drehachse (21; 29) bewegt, das sich von dem ersten Drehbewegungsgesetz unterscheidet und wenigstens teilweise alternativ zu dem ersten Drehbewegungsgesetz ist, aufweist; und
Drehen des Nockens (30) um die erste Drehachse (19; 27), wenn der Stützkörper (18; 26) aufgrund eines Stillstands der Maschine, währenddessen eine Formatänderung durchgeführt wird, in Ruhe ist, um den ersten Abschnitt (33) wenigstens teilweise an dem Arbeitsweg (P1) und den zweiten Abschnitt (34) wenigstens teilweise an dem Rückweg (P2) oder umgekehrt anzuordnen, um das Drehbewegungsgesetz um die zweite Drehachse (21; 29) so zu modifizieren, dass der Nocken (30) längs des Arbeitswegs (P1) auf den Haltekopf (20; 28) einwirkt.

9. Zellophan-Umhüllungsmaschine (1) zum Aufbringen einer Umhüllung auf eine Packung (2), wobei die Zellophan-Umhüllungsmaschine (1) umfasst:
eine Eingabeeinheit (4), die die Packungen (2), die in die Zellophan-Umhüllungsmaschine (1) eintreten, aufnimmt;
eine Einwickeleinheit (5), die stromabwärts der Eingabeeinheit (4) angeordnet ist und einen Einwickelbogen (3) um die jeweilige Packung (2) wickelt und stabilisiert; und
eine Ausgabeeinheit (6), die stromabwärts der Einwickeleinheit (5) angeordnet ist und die Packungen (2) aus der Zellophan-Umhüllungsmaschine (1) führt;
wobei die Zellophan-Umhüllungsmaschine (1) **dadurch gekennzeichnet ist, dass** die Eingabeeinheit (4) und/oder die Ausgabeeinheit (6) eine nach einem der Ansprüche 1 bis 7 ausgebildete Umladetrommel (17; 25) umfassen.

10. Zellophan-Umhüllungsmaschine (1) nach Anspruch 9, wobei die Einwickeleinheit (5) eine Zuführeinheit (10) zum Zuführen von Coupons (11) und eine Umladetrommel (17; 25), die stromabwärts der Zuführeinheit (10) zum Zuführen von Coupons (11) angeordnet ist und nach einem der Ansprüche 1 bis 7 ausgebildet ist, umfasst.

11. Zellophan-Umhüllungsmaschine (1) nach Anspruch 9 oder 10, wobei eine nach einem der Ansprüche 1 bis 7 ausgebildete erste Umladetrommel (17; 25) in der Eingabeeinheit (4) angeordnet ist.

12. Zellophan-Umhüllungsmaschine (1) nach Anspruch 9, 10 oder 11, wobei eine nach einem der Ansprüche 1 bis 7 ausgebildete zweite Umladetrommel (17; 25) in der Ausgabeeinheit (6) angeordnet ist.

13. Zellophan-Umhüllungsmaschine (1) nach einem der Ansprüche 9 bis 12, wobei eine nach einem der Ansprüche 1 bis 7 ausgebildete dritte Umladetrommel (17; 25) in der Einwickeleinheit (5) angeordnet ist.

14. Zellophan-Umhüllungsmaschine (1) nach einem der Ansprüche 9 bis 13, wobei die Ausgabeeinheit (6) ausgelegt ist, eine Umdrehvorrichtung (36) aufzunehmen, die ausgelegt ist, die Packungen (2) um 180° zu drehen.

15. Packanlage (37), umfassend:
eine Packmaschine (39), die ausgelegt ist, Packungen (2) zu produzieren;
eine Zellophan-Umhüllungsmaschine (1) nach einem der Ansprüche 9 bis 14 und die ausgelegt ist, auf jede Packung (2) eine Umhüllung aufzubringen; und
eine Kartoniermaschine (41), die ausgelegt ist, Gruppen von Packungen (2) zu bilden und wenigstens eine Hülle um jede Gruppe von Packungen (2) aufzubringen.

## Revendications

1. Tambour de transfert (17 ; 25) pour transférer des objets (2) suivant un trajet circulaire ; le tambour de transfert (17 ; 25) comprend :
un corps de support cylindrique (18 ; 26), qui est monté rotatif autour d'un premier axe de rotation (19 ; 27) ;
au moins une tête de maintien (20 ; 28), qui est montée rotative sur le corps de support (18 ; 26) de façon à tourner, par rapport au corps de support (18 ; 26), autour d'un deuxième axe de rotation (21 ; 29) ;
une came (30), qui est agencée à l'intérieur du corps de support (18; 26) et demeure immobile lorsque le corps de support (18 ; 26) tourne autour du premier axe de rotation (19 ; 27) ; et
un dispositif actionneur (31), qui est porté par le corps de support (18 ; 26), comprend un rouleau suiveur (32) engageant la came (30), et commande la rotation de la tête de maintien (20 ; 28) autour du deuxième axe de rotation (21 ; 29) ;
dans lequel la rotation du corps de support (18 ; 26) autour du premier axe de rotation (19 ; 27) déplace cycliquement la tête de maintien (20 ; 28) suivant un trajet de travail (P1), qui s'étend entre un poste d'entrée (S5), où la tête de maintien (20; 28) reçoit un objet (2), et un poste de sortie (S6), où la tête de maintien (20 ; 28) relâche l'objet (2), et suivant un trajet de retour (P2), qui s'étend entre le poste de sortie (S6) et le poste d'entrée (S5) ;
le tambour de transfert (17 ; 25) est **caractérisé en ce que** :
la came (30) comprend au moins une première portion (33), qui est conçue pour amener la tête de maintien (20 ; 28) à se déplacer avec une première loi de mouvement de rotation autour du deuxième axe de rotation (21 ; 29), et une deuxième portion (34), qui est conçue pour amener la tête de maintien (20 ; 28) à se déplacer avec une deuxième loi de mouvement de rotation autour du deuxième axe de rotation (21 ; 29), qui est différente de la première loi de mouvement de rotation et est une alternative au moins partielle à la première loi de mouvement de rotation ; et
la came (30) est conçue pour être amenée à tourner autour du premier axe de rotation (19 ; 27), lorsque le corps de support (18 ; 26) est immobile en raison d'un arrêt de la machine pendant lequel un changement de format est effectué, de façon à placer la première portion (33) au moins en partie au niveau du trajet de travail (P1) et la deuxième portion (34) au moins en partie au niveau du trajet de retour (P2) ou inversement de façon à modifier la loi de mouvement de rotation autour du deuxième axe de rotation (21 ; 29) que la came (30) impose à la tête de maintien (20 ; 28) suivant le trajet de travail (P1).

2. Tambour de transfert (17 ; 25) selon la revendication 1, dans lequel la première portion (33) et/ou la deuxième portion (34) ont une extension angulaire qui ne dépasse pas une extension angulaire du trajet de retour (P2).

3. Tambour de transfert (17 ; 25) selon la revendication 1 ou 2, dans lequel :
la première portion (33) est conçue pour faire tourner la tête de maintien (20 ; 28) autour du deuxième axe de rotation (21 ; 29) dans un sens horaire ; et
la deuxième portion (34) est conçue pour faire tourner la tête de maintien (20 ; 28) autour du deuxième axe de rotation (21 ; 29) dans un sens antihoraire.

4. Tambour de transfert (17 ; 25) selon la revendication 3, dans lequel la came (30) comprend une troisième portion (35), qui est conçue pour amener la tête de maintien (20 ; 28) à se déplacer avec une troisième loi de mouvement de rotation autour du deuxième axe de rotation (21 ; 29), qui est différente des première et deuxième lois de mouvement de rotation.

5. Tambour de transfert (17 ; 25) selon la revendication 4, dans lequel la troisième portion (35) ne provoque aucune rotation de la tête de maintien (20 ; 28) autour du deuxième axe de rotation (21 ; 29).

6. Tambour de transfert (17 ; 25) selon la revendication 5, dans lequel :
le trajet de travail (P1) et le trajet de retour (P2) ont une même extension angulaire de 180° ;
la première portion (33) et la deuxième portion (34) ont une même extension angulaire de 90° ; et
la troisième portion (35) a une extension angulaire de 180°.

7. Tambour de transfert (17 ; 25) selon la revendication 5, dans lequel :
le trajet de travail (P1) a une extension angulaire de 90° ;
le trajet de retour (P2) a une extension angulaire de 270° ;
la première portion (33) et la deuxième portion (34) ont une même extension angulaire de 90° ; et
deux troisièmes portions (35) sont prévues, qui sont interposées entre la première portion (33) et la deuxième portion (34) et ont chacune une extension angulaire de 90°.

8. Procédé d'ajustement pour effectuer un changement de format d'un tambour de transfert (17 ; 25) pour transférer des objets (2) suivant un trajet circulaire ; le tambour de transfert (17 ; 25) comprend :
un corps de support cylindrique (18 ; 26), qui est monté rotatif autour d'un premier axe de rotation (19 ; 27) ;
au moins une tête de maintien (20 ; 28), qui est montée rotative sur le corps de support (18 ; 26) de façon à tourner, par rapport au corps de support (18 ; 26), autour d'un deuxième axe de rotation (21 ; 29) ;
une came (30), qui est agencée à l'intérieur du corps de support (18; 26) et demeure immobile lorsque le corps de support (18 ; 26) tourne autour du premier axe de rotation (19 ; 27) ; et
un dispositif actionneur (31), qui est porté par le corps de support (18 ; 26), comprend un rouleau suiveur (32) engageant la came (30), et commande la rotation de la tête de maintien (20 ; 28) autour du deuxième axe de rotation (21 ; 29) ;
dans lequel la rotation du corps de support (18 ; 26) autour du premier axe de rotation (19 ; 27) déplace cycliquement la tête de maintien (20 ; 28) suivant un trajet de travail (P1), qui s'étend entre un poste d'entrée (S5), où la tête de maintien (20; 28) reçoit un objet (2), et un poste de sortie (S6), où la tête de maintien (20 ; 28) relâche l'objet (2), et suivant un trajet de retour (P2), qui s'étend entre le poste de sortie (S6) et le poste d'entrée (S5) ;
le procédé d'ajustement comprend les étapes consistant à :
permettre à la came (30) d'avoir au moins une première portion (33), qui est conçue pour amener la tête de maintien (20 ; 28) à se déplacer avec une première loi de mouvement de rotation autour du deuxième axe de rotation (21 ; 29), et une deuxième portion (34), qui est conçue pour amener la tête de maintien (20 ; 28) à se déplacer avec une deuxième loi de mouvement de rotation autour du deuxième axe de rotation (21 ; 29), qui est différente de la première loi de mouvement de rotation et est une alternative au moins partielle à la première loi de mouvement de rotation ; et
faire tourner la came (30) autour du premier axe de rotation (19 ; 27), lorsque le corps de support (18; 26) est immobile en raison d'un arrêt de la machine pendant lequel un changement de format est effectué, de façon à placer la première portion (33) au moins en partie au niveau du trajet de travail (P1) et la deuxième portion (34) au moins en partie au niveau du trajet de retour (P2) ou inversement de façon à modifier la loi de mouvement de rotation autour du deuxième axe de rotation (21; 29) que la came (30) impose à la tête de maintien (20 ; 28) suivant le trajet de travail (P1).

9. Suremballeuse à cellophane (1) pour appliquer un suremballage à un paquet (2) ; la suremballeuse à cellophane (1) comprend :
une unité d'entrée (4), qui reçoit les paquets (2) entrant dans la suremballeuse à cellophane (1) ;
une unité d'emballage (5), qui est agencée en aval de l'unité d'entrée (4) et emballe et stabilise une feuille d'emballage (3) autour de chaque paquet (2) ; et
une unité de sortie (6), qui est agencée en aval de l'unité d'emballage (5) et mène les paquets (2) hors de la suremballeuse à cellophane (1) ;
la suremballeuse à cellophane (1) est **caractérisée en ce que** l'unité d'entrée (4) et/ou l'unité de sortie (6) comprennent un tambour de transfert (17 ; 25) conçu selon l'une des revendications 1 à 7.

10. Suremballeuse à cellophane (1) selon la revendication 9, dans laquelle l'unité d'emballage (5) comprend une unité d'apport (10) pour apporter des coupons (11) et un tambour de transfert (17 ; 25), qui est agencé en aval de l'unité d'apport (10) pour apporter des coupons (11) et est conçu selon l'une des revendications 1 à 7.

11. Suremballeuse à cellophane (1) selon la revendication 9 ou 10, dans laquelle un premier tambour de transfert (17 ; 25) conçu selon l'une des revendications 1 à 7 est agencé dans l'unité d'entrée (4).

12. Suremballeuse à cellophane (1) selon la revendication 9, 10 ou 11, dans laquelle un deuxième tambour de transfert (17 ; 25) conçu selon l'une des revendications 1 à 7 est agencé dans l'unité de sortie (6).

13. Suremballeuse à cellophane (1) selon l'une des revendications 9 à 12, dans laquelle un troisième tambour de transfert (17 ; 25) conçu selon l'une des revendications 1 à 7 est agencé dans l'unité d'emballage (5).

14. Suremballeuse à cellophane (1) selon l'une des revendications 9 à 13, dans laquelle l'unité de sortie (6) est conçue pour loger un dispositif de retournement (36), qui est conçu pour faire tourner les paquets (2) de 180°.

15. Installation d'empaquetage (37) comprenant :
une empaqueteuse (39) conçue pour produire des paquets (2) ;
une suremballeuse à cellophane (1) selon l'une des revendications 9 à 14 et conçue pour appliquer un suremballage à chaque paquet (2) ; et
une encartonneuse (41), qui est conçue pour former des groupes de paquets (2) et pour appliquer au moins un emballage autour de chaque groupe de paquets (2).
